# EUROPEAN PATENT APPLICATION

(11) **EP 4 776 016 A2**
(43) Date of publication of application: **15.07.2026**
(21) Application number: 26151078.8
(22) Date of filing: 09.01.2026
(51) Int. Cl.: G01S 7/00, B61K 9/08, G01S 7/02, G01S 7/40, G01S 7/41, G01S 13/08, G01S 13/60, G01S 13/86, G01S 13/87, G01S 13/88, G01S 13/92, G08B 21/18, B61L 15/00

(54) **RADAR-BASED DEVICES, SYSTEMS, AND METHODS FOR RAILCAR MONITORING**

(30) Priority: 10.01.2025 US 202563744147 P
(71) Applicant: Nexxiot USA, Frisco, Texas 75034 (US)
(72) Inventor: Schlaefli, Michael, Frisco, TEXAS, 75034 (US); Guimaraes, Joao, Frisco, TEXAS, 75034 (US); Cao, Diego Andrés, Frisco, TEXAS, 75034 (US)
(74) Representative: Eisenführ Speiser

(57) **Abstract**

The present disclosure provides various devices, systems, and methods for railcar monitoring. An example railcar monitoring system includes a sensor device, where the sensor device is mounted to a railcar and includes a radar transceiver and a processor. The processor is configured to cause the radar transceiver to transmit a radar signal toward a surface, such as a rail or a portion of a truck assembly. The processor is also configured to receive a reflection of the radar signal from the radar transceiver. Additionally, the processor is configured to determine a distance between the radar transceiver and the surface based on the reflection of the radar signal. Further, the processor is configured to determine a characteristic of the railcar based on the distance between the radar transceiver and the surface.

## Description

### TECHNICAL FIELD

The present disclosure relates, generally, to radar technologies and, more specifically, to radar-based devices for determining characteristics of a railcar or certain other shipping containers.

### BACKGROUND

Railway transportation plays a pivotal role in global logistics, facilitating the movement of goods across vast distances throughout the world. Given the sheer number of railcars involved in transportation, effective tracking mechanisms are critical in ensuring smooth operation and preventing logistical bottlenecks.

Traditional monitoring methods have evolved in recent years to incorporate portable computing technologies, and this shift has improved the accuracy and efficiency of railcar monitoring. However, there is still significant demand for improved technologies capable of more comprehensive railcar monitoring that address the limitations of existing technologies and better meet the needs of an evolving transportation industry.

### SUMMARY

The present disclosure provides a description of radar-based devices, systems, and methods for railcar monitoring. Example implementations include:

A railcar monitoring system includes a sensor device coupled to a railcar, where the sensor device includes a radar transceiver and a processor. The radar transceiver is configured to transmit a radar signal and receive a reflection of the radar signal. The processor is configured to cause the radar transceiver to transmit the radar signal toward a surface (e.g., a rail, a wheel, a truck assembly, an axle, the ground). The processor is also configured to receive, from the radar transceiver, the reflection of the radar signal. Additionally, the processor is configured to determine a distance (and/or a range rate) between the radar transceiver and the surface based on the reflection of the radar signal. Further, the processor is configured to determine a characteristic of the railcar (e.g., a load borne by the railcar) based on the distance between the radar transceiver and the surface.

A method for monitoring a railcar, where the method includes causing a radar transceiver to transmit a radar signal toward a surface. The method also includes receiving a reflection of the radar signal from the radar transceiver. Additionally, the method includes determining a distance (and/or a range rate) between the radar transceiver and the surface based on the reflection of the radar signal. Further, the method includes determining a characteristic of the railcar based on the distance between the radar transceiver and the surface.

A non-transitory, computer-readable medium storing instructions that, when executed by a processor of a sensor device coupled to a railcar, cause the sensor device to transmit a radar signal toward a surface via a radar transceiver of the sensor device. The instructions also cause the sensor device to receive a reflection of the radar signal from the surface via the radar transceiver. Further, the instructions cause the sensor device to determine a distance (and/or a range rate) between the radar transceiver and the surface based on the reflection of the radar signal. Further, the instructions cause the sensor device to determine a characteristic of the railcar based on the distance between the radar transceiver and the surface.

A method of manufacturing a sensor device, where the method includes providing a radar transceiver configured to transmit a radar signal and receive a reflection of the radar signal from the surface. The method also includes providing a processor configured to cause the radar transmitter to transmit the radar signal toward the surface. The processor is also configured to receive the reflection of the radar signal from the radar transceiver. Additionally, the processor is configured to determine a distance between the radar transceiver and the surface based on the reflection of the radar signal. Further, the processor is configured to determine a characteristic of the railcar based on the distance between the radar transceiver and the surface. In addition to the radar transceiver and the processor, the method also includes providing a housing that includes a dielectric lens configured to disperse waves that travel through the dielectric lens (e.g., the radar signal). The housing and the dielectric lens may optionally form a single body. Additionally, the method includes situating the radar transceiver in the housing such that when the radar transceiver transmits the radar signal, the radar signal travels through the dielectric lens. Further, the method includes situating the processor in the housing and connecting the radar transceiver to the processor such that the processor can cause the radar transceiver to transmit the radar signal and receive the reflection of the radar signal from the radar transceiver.

### BRIEF DESCRIPTION OF THE DRAWINGS

The implementations disclosed herein are illustrated by way of example, and not by way of limitation, in the figures of the accompanying drawings. Like reference numerals refer to corresponding parts throughout the drawings.
Figures 1A and 1B illustrate an example railcar and devices for monitoring the railcar, in accordance with some implementations. Specifically, Figure 1A provides a perspective view of the railcar, and Figure 1B offers a partial view of the same.
Figures 2A and 2B illustrate an example sensor device for monitoring a railcar, in accordance with some implementations. In particular, Figure 2A depicts a housing of the sensor device, and Figure 2B is a block diagram depicting the internal components thereof.
Figures 3A and 3B illustrate an example coordination hub for managing sensor devices and monitoring a railcar, in accordance with some implementations. In particular, Figure 3A depicts a housing of the coordination hub, and Figure 3B is a block diagram depicting the internal components thereof.
Figures 4A and 4B illustrate example graphs that include data from a sensor device, in accordance with some implementations.
Figure 5 illustrates an example method for monitoring a railcar, in accordance with some implementations.

### DETAILED DESCRIPTION

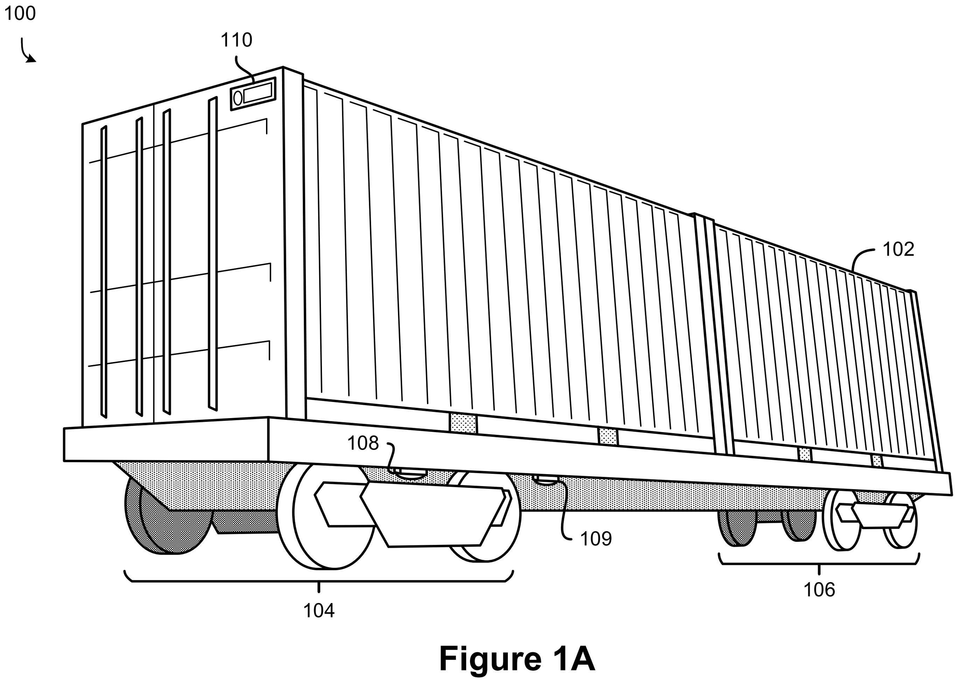

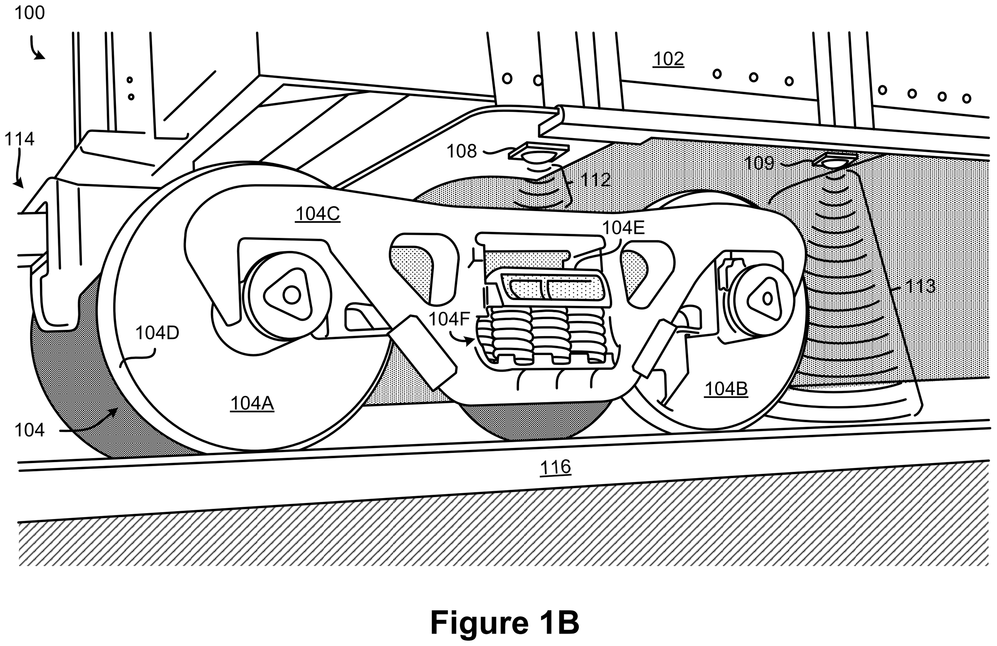

Figures 1A and 1B illustrate an example railcar 100 and devices 108-110 for monitoring the railcar 100, in accordance with some implementations. Two of these devices 108-110 are radar-based sensor devices 108-109 that include respective radar transceivers and are configured to determine various characteristics of the railcar 100.

These sensor devices 108-109 provide various improvements over current monitoring technologies. Whereas many modern devices must be mounted directly onto the railcar truck assembly (e.g., one of truck assemblies 104 and 106), the sensor devices 108-109 can be mounted to the body 102 of the railcar 100. Accordingly, the sensor devices 108-109 need not be removed from the railcar 100 when truck assemblies 104 and 106 are replaced or removed for maintenance. Additionally, unlike some monitoring devices, the sensor devices 108-109 present a standalone monitoring solution that can operate without a reflector plate (e.g., for reflecting a transmitted signal) or a signal receiver.

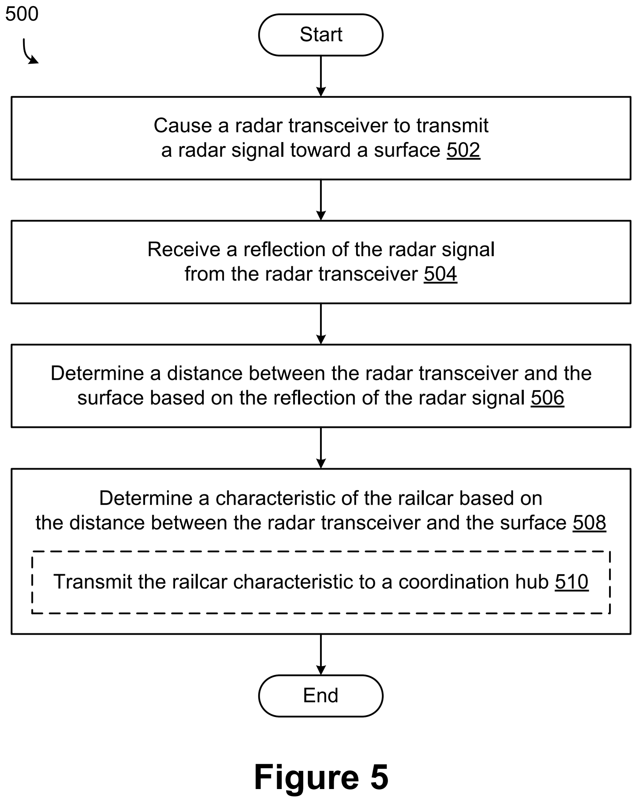

Figure 1A provides a perspective view of the railcar 100, which includes a body 102 mounted on truck assemblies 104 and 106. In the illustrated embodiment, two sensor devices 108-109 are coupled to the underside of the body 102. Each of the sensor devices 108-109 is configured to transmit a respective radar signal (i.e., an electromagnetic wave in the radio or microwave domain) and receive a reflection of that signal. After receiving a reflected signal, the sensor devices 108-109 can then determine various characteristics of the railcar 100, such as whether it is empty, loaded, or overloaded. Additionally, multiple sensor devices (e.g., positioned at opposite ends of the railcar 100) can be used to determine whether the railcar is tilted or unevenly loaded. This is discussed in more detail with respect to Figures 1B and 5.

In some embodiments, the railcar 100 also has a coordination hub 110 that is connected (e.g., electrically or wirelessly) to the sensor devices 108-109 and can be connected to other sensor devices coupled to the railcar 100 or to other railcars in the same train. Wireless connection between the coordination hub 110 and the sensor devices 108-109 can significantly increase the convenience of outfitting a railcar and/or an entire train with the devices 108-110. Alternatively, in some embodiments, the sensor devices 108-109 can be configured to perform the operations of the coordination hub 110 (e.g., coordinating with each other, forwarding detected railcar characteristics to a user), further simplifying the setup process.

In some embodiments, the coordination hub 110 receives data from the sensor devices 108-109 and stores that data, processes the data, and/or forwards it to another device (e.g., a smartphone, a remote monitoring station) and/or to a remote server. For purposes of receiving and/or forwarding the data, the coordination hub 110 can be configured for cellular communication, satellite communication, and/or other wireless communication. In some embodiments, the coordination hub 110 receives the data from the sensor devices 108-109 and then determines additional railcar characteristics based on the data, such as whether the railcar 100 is tilted. As with the determinations performed by the sensor devices 108-109, these determinations are also discussed in more detail with respect to Figures 1B and 5.

Figure 1B offers a partial view of the railcar 100, including the truck assembly 104, the sensor devices 108-109, and a coupler 114 for coupling the railcar 100 to another railcar. In the illustrated embodiment, the truck assembly 104 includes two wheels 104A-B, each of which includes a respective wheel tread (e.g., wheel tread 104D of wheel 104A) that rides on a rail 116. The truck assembly 104 also includes a side frame 104C and a bolster 104E. The bolster 104E is directly coupled to the body 102 of the railcar 100, and, therefore, directly bears the weight of the railcar body 102. The bolster 104E is supported by truck springs 104F that provide suspension for the body 102, and compress based on the weight of the body 102.

In some embodiments, the first sensor device 108 is positioned on the bottom side of the body 102 such that the device's field of view includes an upper surface of the side frame 104C. The distance between the sensor device 108 and that surface will vary with the weight of the railcar body 102 (e.g., the loaded weight thereof). For instance, an increased load in the body 102 will cause the truck springs 104F to compress and the distance between the sensor device 108 and the upper surface of the side frame 104C to decrease.

This distance can be determined by the sensor device 108 based on a radar signal 112 transmitted by the device 108. Specifically, after the sensor device transmits the radar signal 112, the signal 112 reflects off of the top of the side frame 104C and the reflection of the signal 112 is then received by the sensor device 108. Based on the amount of time it takes the signal 112 to return to the sensor device 108 after its transmission, the sensor device 108 can then determine the distance between the device 108 and the side frame 104C. This distance can be translated into a weight of the railcar body 102, for instance, using a lookup table or a formula. From there, the sensor device can further determine whether the railcar 100 is empty, loaded, or overloaded or, in some embodiments and in conjunction with another sensor device, whether the railcar 100 is tilted. Additionally, in some embodiments, the sensor device can determine an amount of wear and tear on the springs 104F.

In some embodiments, a different, second sensor device 109 is also positioned on the bottom side of the body 102, though its field of view includes the rail 116 rather than the truck assembly 104. As with the first sensor device 108, the second device 109 transmits a radar signal 113 in order to determine characteristics of the railcar 100. For example, the second device 109 can determine the weight of the railcar body 102 based on a distance between the second sensor device 109 and the rail 116. As noted above, in some embodiments, either or both of the sensor devices 108-109 can transmit a radar signal towards other surfaces and receive a reflection therefrom, such as an axle of the truck assembly 104, the ground beneath the rail 116, or any other suitable surface.

The sensor devices 108-109 can also determine other characteristics of the railcar 100 based on distances between the sensor devices 108-109 and surfaces from which their respective radar signals 112-113 reflect. The devices 108-109 can determine, for instance, whether the wheel tread 104D has a flat area, whether the truck assembly 104 is hunting (i.e., oscillating from side to side), whether the railcar 100 is tilted, and whether the railcar 100 is coupled to another railcar via the coupler 114. Each of these railcar characteristics can be recorded (e.g., for later analysis) by the sensor devices 108-109 or communicated to another electronic device such as the coordination hub 110 or a remote monitoring system for notifying a user (e.g., an operator of a train that includes the railcar) of the characteristic.

Hunting detection, for instance, may involve repeatedly determining a distance between a sensor device and the truck assembly 104, where the sensor device is positioned to detect a non-horizontal surface of the truck assembly 104 (e.g., the face of the side frame 104C). If a difference between measured distances satisfies (e.g., meets or exceeds) a preset threshold, then the sensor device can determine that the truck assembly 104 is hunting. Similarly, a sensor device positioned on a front or back end of a railcar 100 can determine whether the railcar 100 is coupled to another railcar, for instance, by detecting a surface (e.g., a face of the body of another railcar) opposite the railcar 100 and within a predetermined distance.

In some embodiments, another sensor device is placed on the body 102 of the railcar 100 to measure displacement of the coupler 114. This sensor can be angled slightly downwards to track the speed of the railcar 100 and/or the speed of an incoming railcar (e.g., when the two railcars are coupled together).

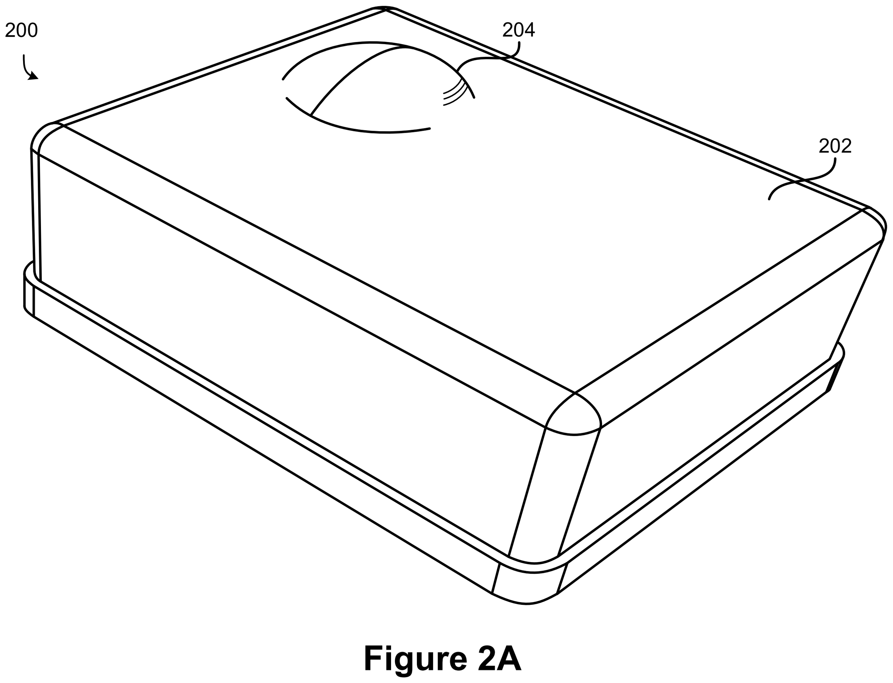

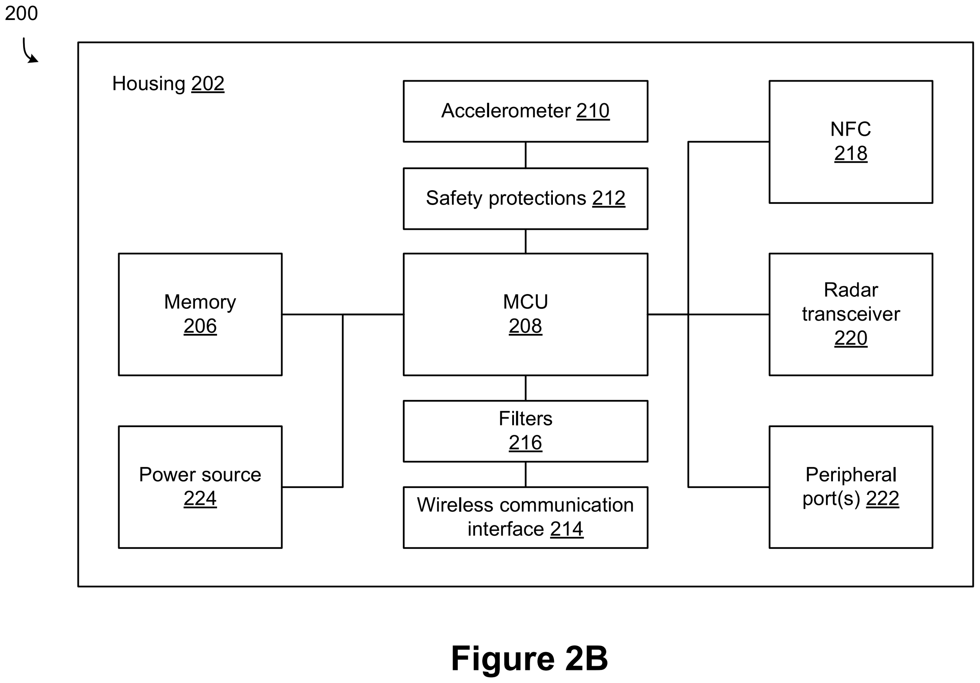

Figures 2A and 2B illustrate an example sensor device 200 (e.g., sensor devices 108-109) for monitoring a railcar (e.g., railcar 100), in accordance with some implementations. Figure 2A depicts a housing 202 of the device 200, which, can be formed of a dielectric material so as to not obstruct electromagnetic waves (e.g., radar signals) transmitted therethrough. In some embodiments, the dielectric material of the housing 202 is specifically designed to be transparent only to radar signals of a wavelength used by the sensor device 200. In the illustrated embodiment, the housing 202 includes a lens 204 configured to disperse waves that travel therethrough or focus waves that travel therethrough at an expected distance between the sensor device 200 and the surface towards which the device 200 transmits a radar signal. This lens can be a component separate from the housing 202; however, in some embodiments, the housing 202 and the lens 204 together form a single body to simplify manufacturing and reduce costs of the sensor device 200. This single-body configuration may also help to ensure the sensor device 200 is sealed from the elements.

The backside of the sensor device 200 (not pictured) may include an adhesive for adhering the device 200 to a railcar (e.g., railcar 100). Additionally, or alternatively, the sensor device may include additional hardware for mounting the device 200 to a railcar, such as a locking mechanism configured to pair with the railcar or nuts and bolts configured to do the same.

Figure 2B is a block-diagram depicting the electrical components contained within the housing 202 of the sensor device 200. These components include a memory 206, a microcontroller unit (MCU) or another processing unit 208, an accelerometer 210, safety protections 212 (e.g., Atmosphères Explosibles (ATEX), an EU safety directive that includes various regulations and safety standards), a wireless communication interface 214 (e.g., a Bluetooth interface, a 2.4 GHz radio) and corresponding filters 216, a near-field-communication (NFC) interface 218, a radar transceiver 220, one or more peripheral ports 222 (e.g., a Universal Serial Bus, USB, port), and a power source 224 (e.g., a battery, a solar cell). Not all of these components are necessary to the sensor device, however they are included here for illustrative purposes.

The memory 206 of the device 200 is a non-transitory, computer readable medium that stores instructions for execution by the MCU 208. When executed, these instructions may cause the MCU 208 to transmit a radar signal (e.g., radar signals 112-113) via the radar transceiver 220, receive a reflection of the signal via the transceiver 220, and then determine a characteristic of a railcar based on the reflected signal. The instructions may cause the MCU 208 to perform other operations, such as those discussed with respect to Figure 5.

In some embodiments, the accelerometer 210 provides acceleration data to the MCU 208 for use in determinations regarding railcar characteristics. In some embodiments, the safety protections 212 help ensure that the sensor device 200 complies with ATEX or other safety standards. In some embodiments, the wireless communication interface 214 and its corresponding filters 216 allow the sensor device to communicate with other sensor devices, a coordination hub (e.g., coordination hub 110), or mobile devices (e.g., a smartphone). In some embodiments, the NFC interface 218 allows the sensor device to receive or provide information to a device brought near (e.g., within 1 centimeter) the sensor device 200. This may allow, for instance, for a mobile device to obtain an identifier of the sensor device 200 from the device 200. In some embodiments, the radar transceiver 220 is configured to transmit a radar signal (e.g., radar signals 112-113) toward a surface (e.g., a rail, a wheel, a truck assembly, an axle, the ground) and receive a reflection of the radar signal from the surface. The radar transceiver 220 can include an antenna configured to both transmit and receive radar signals, or it can include two or more antennas dedicated, respectively, to transmitting or receiving radar signals. In some embodiments, the one or more peripheral ports 222 allow for firmware updates to the sensor device 200.

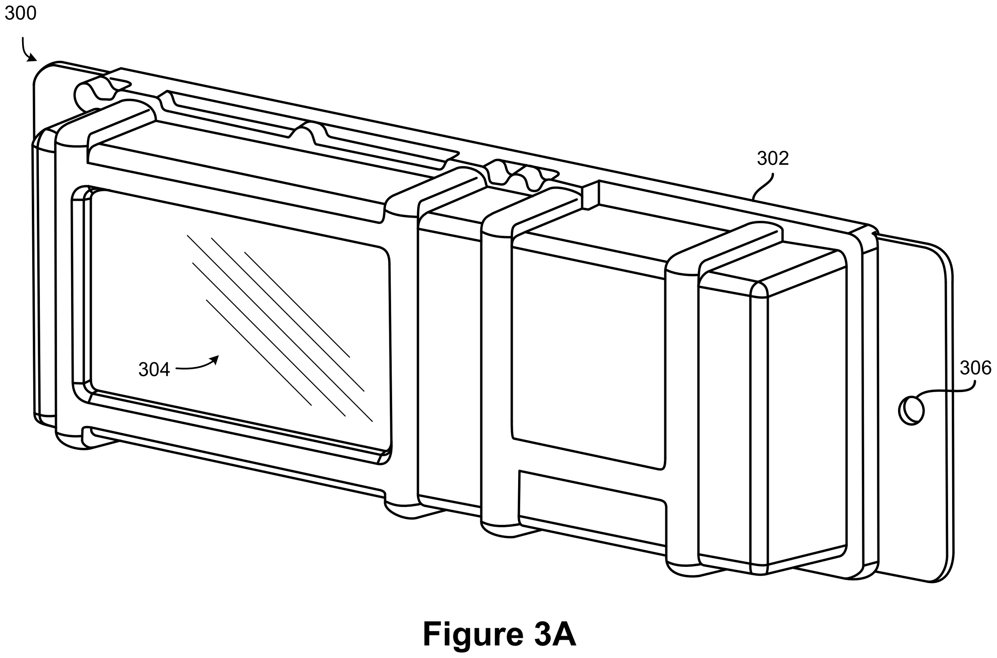

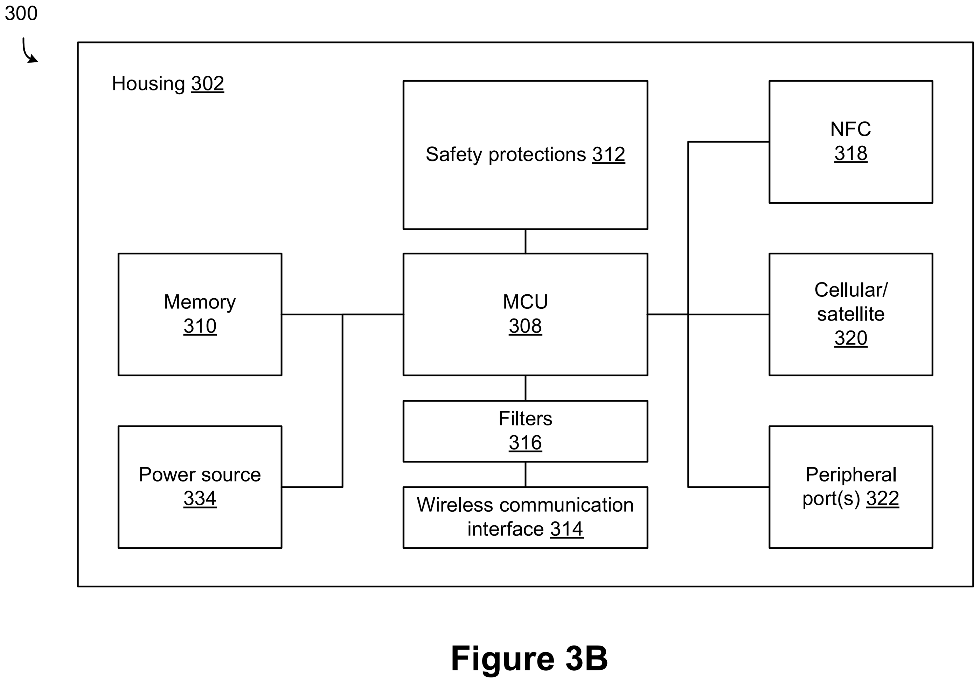

Figures 3A and 3B illustrate an example coordination hub 300 for managing sensor devices (e.g., sensor device 200) and monitoring a railcar (e.g., railcar 100), in accordance with some implementations. Figure 3A depicts a housing 302 of the coordination hub 300. In the illustrated embodiment, the coordination hub 300 includes a solar panel for powering the hub 300 and a mounting hole 306 for mounting the hub 300 to a railcar. As with the sensor device 200 discussed above, in some embodiments, the coordination hub 300 can be mounted to a railcar via adhesive or other means. In such embodiments, the hub 300 may not include the mounting hole 306.

Figure 3B is a block diagram depicting the internal components of the coordination hub 300. These components include a memory 310, an MCU or another processing unit 308, safety protections 312 (e.g., ATEX protections), a cellular and/or satellite interface 320, a wireless communication interface 314 (e.g., a Bluetooth interface, a 2.4 GHz radio) and corresponding filters 316, an NFC interface 318, one or more peripheral ports 322, and a power source 334. Not all of these components are necessary to the coordination hub 300, however they are included here for illustrative purposes.

The memory 206 of the hub 300 is a non-transitory, computer readable medium that stores instructions for execution by the MCU 308. When executed, these instructions may cause the MCU 308 to receive a railcar characteristic from one or more sensor devices, determine a railcar characteristic, communicate with a remote monitoring station, and so on. The instructions may also cause the MCU 308 to perform any other operations discussed herein with respect to a coordination hub.

The cellular and/or satellite interface 320 allows the coordination hub 300 to communicate with a remote monitoring station, such as a mobile device, a server system, or a computer system associated with the train. Additionally, as with the sensor device 200, the safety protections 312 can help ensure that the communication hub 300 complies with ATEX or other safety standards. Further, the wireless communication interface 314 and its corresponding filters 316 allow the coordination hub 300 to communicate with sensor devices, other coordination hubs (e.g., coordination hubs connected to other railcars), or mobile devices (e.g., a smartphone). Moreover, the NFC interface 318 allows the coordination hub 300 to receive or provide information to a device brought nearby (e.g., within 1 centimeter). This may allow, for instance, for a mobile device to obtain an identifier of the coordination hub 300 from the hub 300. Additionally, the one or more peripheral ports 322 allow for firmware updates to the coordination hub 300.

The power source 334 provides power to the MCU 308 and other components of the coordination hub 300. In some embodiments, the power source 334 is the solar panel 304 discussed for Figure 3A. Alternatively, in some embodiments, the power source 334 is a rechargeable battery or a direct line to a power source of the train. The power source 334 can be any power source suitable for powering the communication hub 300.

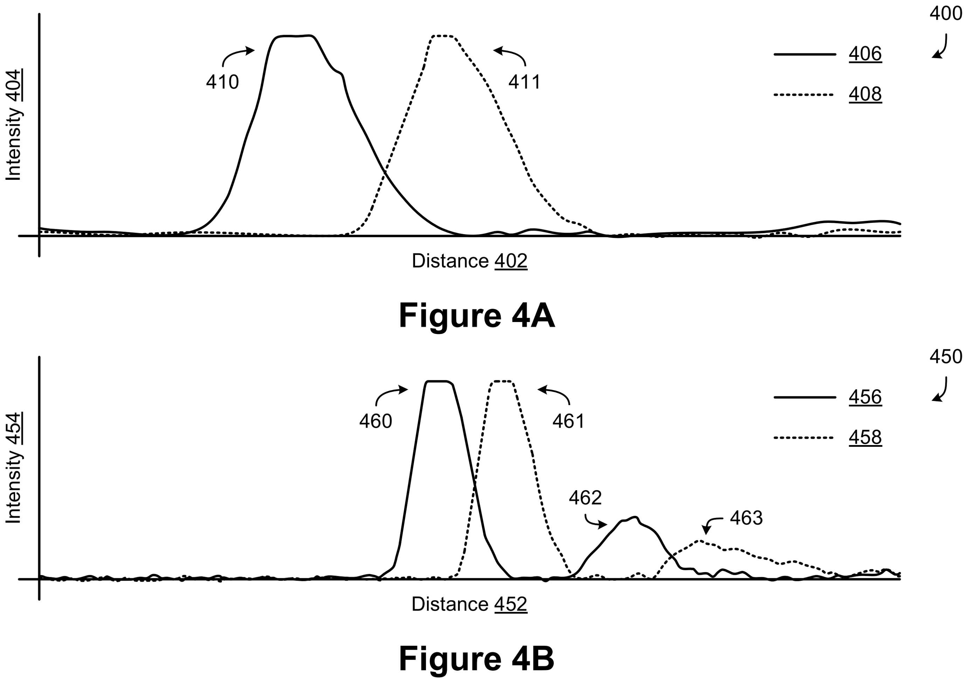

Figures 4A and 4B illustrate example graphs 400 and 450 that include data from a sensor device (e.g., sensor device 200), in accordance with some implementations. The first graph 400 includes data captured by a sensor device (e.g., sensor device 108) positioned above a truck assembly (e.g., truck assembly 104) of a railcar (e.g., railcar 100), whereas the second graph 450 includes data captured by a sensor device (e.g., sensor device 109) positioned above a rail (e.g., rail 116) and ground underneath the rail. Both graphs include solid 406 and 456 and dotted lines 408 and 458 that correspond, respectively, to data captured when the railcar is full and when the railcar is empty.

The first graph 400 includes peaks 410-411 indicative of a distance between the sensor device and the truck assembly. Specifically, the first peak 410 indicates a distance between the sensor device and the truck assembly when the railcar is full, and the second peak 411 indicates a distance between the sensor device and the truck assembly when the railcar is empty. In some embodiments, the sensor device or a device connected thereto (e.g., a coordination hub) is calibrated with these distances (see peaks 410-411). In this manner, after determining the distance between the sensor device and the truck assembly, the sensor device or device connected thereto can compare that distance to the calibrated distances and determine whether the railcar is full, partially loaded, empty, or overloaded.

The second graph 450 includes peaks 460-461 indicative of a distance between the sensor device and the rail, as well as peaks 463-463 indicative of a distance between the sensor device and the ground. Specifically, the first rail peak 460 indicates a distance between the sensor device and the rail when the railcar is full; the second rail peak 461, the distance when the railcar is empty. The first ground peak 462 indicates a distance between the sensor device and the ground when the railcar is full; the second ground peak 463, the distance when the railcar is empty. A sensor device or device connected thereto can likewise be calibrated with this data to determine whether the railcar is empty, full, partially loaded, or overloaded.

Figure 5 illustrates an example method 500 for monitoring a railcar, in accordance with some implementations. For simplicity, the present disclosure describes the method 500 with reference to the aforenoted components of Figures 1A through 4. However, a person of skill in the art will appreciate that certain aspects of the method 500 can be performed independently of such components (e.g., by another electronic device) while still accomplishing the purpose of railcar monitoring.

The method 500 is performed by a processor (e.g., MCU 208) of a sensor device (e.g., sensor devices 108-109 and 200), where the sensor device is mounted to a railcar (e.g., railcar 100). In the illustrated embodiment, the processor causes (502) a radar transceiver (e.g., radar transceiver 220) to transmit a radar signal (i.e., an electromagnetic wave in the radio or microwave domain; e.g., radar signals 112-113) toward a surface. The surface can be a surface of a truck assembly (e.g., truck assembly 104), such as an upper surface of a side frame (e.g., side frame 104C) of the truck assembly or a face of the truck assembly. The surface can also be a surface of a wheel (e.g., wheel 104A) of the truck assembly, such as a tread of the wheel (e.g., wheel tread 104D). Additionally, the surface can be a surface of a rail (e.g., rail 116) or a surface of ground beneath the rail. Further, the surface can be a surface of a reflector plate mounted to the truck assembly of the railcar. Following transmission of the radar signal, the processor receives (504) a reflection of the radar signal from the radar transceiver 504.

Based on the received reflection of the radar signal, the processor determines (506) a distance between the radar transceiver and the surface. This determination may account for an amount of time between transmission of the radar signal and receipt of the reflection of the signal. The processor also determines (508) a characteristic of the railcar based on the distance between the radar transceiver and the surface. For example, as discussed in more detail below, the processor may determine whether the railcar is empty, loaded, or overloaded, whether the railcar is tilted or unevenly loaded, whether the railcar is coupled to another railcar, and so on. Optionally, in some embodiments, the processor transmits (510) the railcar characteristic to a coordination hub (e.g., coordination hub 300) after determining the railcar characteristic.

In some embodiments, the sensor device is connected (e.g., electrically or wirelessly) to a coordination hub (e.g., coordination hub 300), where the coordination hub is configured to receive the railcar characteristic from the sensor device and transmit the railcar characteristic to a remote monitoring system. As discussed in more detail herein, in some embodiments, the coordination hub is configured to perform other operations, such as transmitting warnings, coordinating with other sensor devices, and so on. It is noted that, in some embodiments, the sensor device itself is configured to perform any and/or all of the functionality described with respect to the coordination hub.

In some embodiments, the coordination hub is further configured to determine whether the railcar characteristic satisfies a hazard threshold and, responsive to determining that the railcar characteristic satisfies the hazard threshold, transmit a warning (e.g., a notification) to the remote monitoring system regarding the railcar characteristic. For example, if the railcar characteristic is a weight of the railcar, the coordination hub may transmit a warning if the railcar weight it above a predefined limit (i.e., if the railcar is overloaded).

In some embodiments, the remote monitoring system includes another sensor device. The other sensor device is coupled to the railcar. Similar to the sensor device, the other sensor device includes another radar transceiver configured to transmit another radar signal and receive a reflection of the other radar signal. The other sensor device also includes another processor configured to cause the other radar transceiver to transmit the other radar signal toward another surface and receive the reflection of the other radar signal from the other radar transceiver. The processor is also configured to determine another distance between the other radar transceiver and the other surface based on the reflection of the other radar signal. Additionally, the processor is configured to determine the other characteristic of the railcar based on the other distance between the other radar transceiver and the other surface.

In some embodiments, the coordination hub is further configured to receive the distance from the sensor device and the other distance from the other sensor device. The coordination hub is further configured to determine an orientation of the railcar based the difference and the other difference. For example, if a difference between the distance and the other distance satisfies a threshold (e.g., 0.1 meters), this may indicate that the railcar is tilted or unevenly loaded. Accordingly, the coordination hub can send a warning to the remote monitoring system regarding the railcar orientation. In order to ensure the distance and the other distance are indicative of the orientation of the railcar, the sensor device and the other sensor device can be coupled to opposite ends of the railcar (e.g., an opposite lateral end, an opposite horizontal end, or an opposite diagonal end).

In some embodiments, the sensor device further includes a wireless transmitter (e.g., wireless communication interface 214), such as a 2.4 gigahertz Bluetooth radio, and the coordination hub includes a wireless receiver. Receiving the railcar characteristic at the coordination hub may therefore include receiving the railcar characteristic from the sensor device via the wireless receiver.

In some embodiments, the wireless transmitter is configured to transmit the railcar characteristic at a transmit power up to +30 decibel milliwatts.

In some embodiments, determining the distance between the radar transceiver and the surface is further based on an amount of time between causing the radar transceiver to transmit the radar signal and receiving the reflection of the radar signal from the radar transceiver. Additionally, the determined characteristic of the railcar can be the weight of the railcar or a load state of the railcar (e.g., whether the railcar is empty, loaded, or overloaded).

In some embodiments, the sensor device further includes a dielectric lens (e.g., lens 204) configured to disperse waves (e.g., the radar signal) that travel through the dielectric lens, where transmitting the radar signal causes the radar signal to travel through the dielectric lens. Additionally, in some embodiments, the sensor device further includes a housing (e.g., housing 202) and the housing and the dielectric lens form a single body. Further, in some embodiments, the dielectric lens is configured to disperse the radar signal between 20 and 80 degrees.

In some embodiments, the sensor device further includes an accelerometer (e.g., accelerometer 210 configured to collect acceleration data, and the processor is further configured to receive the acceleration data from the accelerometer. Additionally, in some embodiments, the processor is further configured to determine an orientation of the sensor device based on the acceleration data and determine a velocity of the railcar based on the orientation of the sensor device, a wavelength of the radar signal, and an amount of frequency or phase shift between the radar signal and the reflection of the radar signal (e.g., due to the Doppler effect). Further, in some embodiments, the processor is further configured to determine whether the railcar is derailed based on the acceleration data and, responsive to determining that the railcar is derailed, cause the radar transceiver to switch from operating in a default measuring mode to operating in a high-speed measuring mode (e.g., involving more frequent radar signal transmissions) for a predetermined amount of time. Moreover, in some embodiments, the processor is further configured to monitor acceleration of the railcar based on the acceleration data and adjust power consumption of the sensor device based on the acceleration of the railcar (e.g., cause the sensor device to operate in a low-power mode while the railcar acceleration does not satisfy a minimum acceleration threshold, or cause the sensor device to transmit the radar signal and determine the railcar characteristic after determining that the railcar acceleration satisfies a maximum acceleration threshold).

In some embodiments, the sensor device is configured to conform with one or more of the following safety standards: (1) ATEX or International Electrotechnical Commission System for Certification to Standards Relating to Equipment for Use in Explosive Atmospheres (IECEx) standards, such as (i) Directive 2014/34/EU, (ii) EN 60079-0, (iii) IEC 60079-0, (iv) EN 60079-11, (v) IEC 60079-11, (vi) Ex ib IIC T4 Gb, and (vii) Ex ib IIIC T135°C Db; (2) Hazardous Locations (HAZLOC) standards, such as (i) Class I, Zone 1, AEx ib IIC T4 Gb, (ii) Class II, Zone 21, AEx ib IIIC T135°C Db, (iii) Class I, II, III, Division 2, Groups A, B, C, D, F, G, T4, (iv) CAN/CSA C22.2 No. 60079-0, (v) CAN/CSA C22.2 No. 60079-11, (vi) UL STD 62368-1, 121201, 50, 50E, and (vii) CSA STD C22.2 # 62368-1, 213, 94.1, 94.2; (3) normal locations standards, such as (i) UL 62328-1 and (ii) CSA C22.2 No. 62368-1; (4) radio equipment and Electromagnetic Compatibility (EMC) standards comprising (i) ETSI EN 300 328, (ii) FCC 15.247, (iii) IC ICES-003, and (iv) EN 50121-3-2:2016/A1:2019; and (5) environmental standards, such as (i) RoHS, (ii) WEEE, (iii) IEC 61373 Category 1, Class A, (iv) IEC 60529 (IP66/IP67), (v) ISO 20653 (IPx9k), (vi) EN 50155, and (vii) EN 50125-1.

In some embodiments, the railcar comprises a body and a truck assembly, the sensor device is coupled to the body or the truck assembly, the surface includes a wheel tread (e.g., wheel tread 104D) of a wheel (e.g., wheel 104A) of the truck assembly, and the processor is further configured to determine whether the wheel tread has a flat area based on the reflection of the radar signal from the wheel tread. For example, the processor may cause the radar transceiver to transmit another radar signal, receive a reflection of the radar signal, determine another distance between the radar transceiver and the surface (i.e., the wheel tread), and then determine whether the wheel tread has a flat area based on a difference between the distance and the other distance.

In some embodiments, the railcar comprises a body and a truck assembly, the sensor device is coupled to the body, the surface includes a non-horizontal surface of the truck assembly, such as a face of a side frame (e.g., side frame 104C) of the truck assembly, and the processor is further configured to determine whether the truck assembly is hunting based on the reflection of the radar signal from the non-horizontal surface. For example, the processor may cause the radar transceiver to transmit another radar signal, receive a reflection of the radar signal, determine another distance between the radar transceiver and the surface (i.e., the non-horizontal surface), and then determine whether the truck assembly is hunting based on a difference between the distance and the other distance.

In some embodiments, the railcar comprises a body, a coupler, and a truck assembly, the sensor device is coupled to a front end of the body or a rear end of the body, the surface includes a portion of the coupler or of another railcar, and the processor is further configured to determine whether the railcar is coupled to the other railcar based on the reflection of the radar signal from the portion of the coupler or of the other railcar and then determine a speed at which the railcar is coupled to the other railcar based on the reflection of the radar signal from the coupler or the other railcar.

In some embodiments, the processor is further configured to determine an amount of compression of the coupler based on the reflection of the radar signal from the portion of the coupler or of the other railcar. (In some embodiments, the processor is further configured to determine a draft gear and/or end-of-car (EOC) unit of the railcar based, for instance, on the compression of the coupler.) In such embodiments, the processor is further configured to determine whether the amount of compression satisfies a hazard threshold (e.g., based on the draft gear and/or EOC unit) and, responsive to determining that the amount of compression satisfies the hazard threshold, transmit a warning to a remote monitoring station regarding the amount of compression.

In some embodiments, the sensor device further includes a wireless receiver configured to receive an identifier of the other railcar from a radio beacon (e.g., BLE, IEEE 802.15.4 or UWB) coupled to the other railcar and the processor is further configured to, after determining that the railcar is coupled to the other railcar, receive the identifier of the other railcar from the wireless receiver and transmit the identifier of the other railcar to a remote monitoring station. In such embodiments, the remote monitoring station is configured to receive a plurality of railcar identifiers including the identifier of the other railcar and additional identifiers for additional railcars and determine based on the plurality of railcar identifiers a composition of a train comprising the railcar, the other railcar, and the additional railcars. Further, in such embodiments, each of the railcars in the train may include a respective sensor device configured to receive one or more identifiers for one or more neighboring railcars and transmit the one or more identifiers to the remote monitoring station. Additionally, determining the composition of the train can include determining a complete listing of the railcars in the train, determining an ordering for the railcars in the train, and so on.

In some embodiments, the surface is not stationary with respect to the radar transceiver (e.g., rail 116, side frame 104C), the sensor device is positioned such that a field of view of the radar transceiver includes the surface and another portion of the railcar that is stationary with respect to the radar transceiver (e.g., body 102, bolster 104E). In this manner, transmitting the radar signal includes transmitting the radar signal to the other portion of the railcar in addition to the surface. Accordingly, the processor can be further configured to calibrate itself based on the reflection of the radar signal from the other portion of the railcar. This may lead to more accurate determinations regarding distances between the radar transceiver and the surface or regarding railcar characteristics.

## Claims

1. A railcar monitoring system comprising:
a sensor device coupled to a railcar and comprising:
a radar transceiver configured to:
transmit a radar signal; and
receive a reflection of the radar signal; and
a processor configured to:
cause the radar transceiver to transmit the radar signal toward a surface;
receive the reflection of the radar signal from the radar transceiver;
determine a distance between the radar transceiver and the surface based on the reflection of the radar signal; and
determine a characteristic of the railcar based on the distance between the radar transceiver and the surface.

2. The railcar monitoring system of claim 1, further comprising a coordination hub connected to the sensor device and configured to:
receive the railcar characteristic from the sensor device;
transmit the railcar characteristic to a remote monitoring station;
determine whether the railcar characteristic satisfies a hazard threshold; and
responsive to determining that the railcar characteristic satisfies the hazard threshold, transmit a warning to the remote monitoring station regarding the railcar characteristic.

3. The railcar monitoring system of claim 1, further comprising:
another sensor device coupled to the railcar and comprising:
another radar transceiver configured to:
transmit another radar signal; and
receive a reflection of the other radar signal; and another processor configured to:
cause the other radar transceiver to transmit the other radar signal toward another surface;
receive the reflection of the other radar signal from the other radar transceiver;
determine another distance between the other radar transceiver and the other surface based on the reflection of the other radar signal; and
determine another characteristic of the railcar based on the other distance between the other radar transceiver and the other surface; and
a coordination hub configured to:
receive the distance from the sensor device and the other distance from the other sensor device, wherein the sensor device is coupled to an end of the railcar and the other sensor device is coupled to an opposite end of the railcar;
determine an orientation of the railcar based on a difference between the distance and the other distance;
determine whether the railcar is tilted based on the orientation of the railcar; and
responsive to determining that the railcar is tilted, transmit a warning to a remote monitoring system regarding the orientation of the railcar.

4. The railcar monitoring system of any one of claims 1 through 3, wherein:
determining the distance between the radar transceiver and the surface is further based on an amount of time between causing the radar transceiver to transmit the radar signal and receiving the reflection of the radar signal from the radar transceiver; and
determining the railcar characteristic based on the distance comprises determining whether the railcar is empty, loaded, or overloaded.

5. The railcar monitoring system of any one of claims 1 through 4, wherein:
the sensor device further comprises a housing and a dielectric lens configured to disperse waves that travel through the dielectric lens, wherein the housing and the dielectric lens form a single body; and
transmitting the radar signal causes the radar signal to travel through the dielectric lens.

6. The railcar monitoring system of any one of claims 1 through 5, wherein:
the sensor device further comprises an accelerometer configured to collect acceleration data; and
the processor is further configured to:
receive the acceleration data from the accelerometer;
determine an orientation of the sensor device based on the acceleration data; and
determine a velocity of the railcar based on the orientation of the sensor device, a wavelength of the radar signal, and an amount of frequency or phase shift between the radar signal and the reflection of the radar signal.

7. The railcar monitoring system of claim 6, wherein the processor is further configured to:
determine whether the railcar is derailed based on the acceleration data; and
responsive to determining that the railcar is derailed, cause the radar transceiver to switch from operating in a default measuring mode to operating in a high-speed measuring mode for a predetermined amount of time.

8. The railcar monitoring system of any one of claims 1 through 7, wherein:
the railcar comprises a body and a truck assembly;
the sensor device is coupled to the body or the truck assembly;
the surface comprises a wheel tread of a wheel of the truck assembly; and
the processor is further configured to determine whether the wheel tread has a flat area based on the reflection of the radar signal from the wheel tread.

9. The railcar monitoring system of any one of claims 1 through 8, wherein
the railcar comprises a body and a truck assembly;
the sensor device is coupled to the body;
the surface comprises a non-horizontal surface of the truck assembly; and
the processor is further configured to determine whether the truck assembly is hunting based on the reflection of the radar signal from the non-horizontal surface.

10. The railcar monitoring system of any one of claims 1 through 9, wherein:
the railcar comprises a body, a coupler, and a truck assembly;
the sensor device is coupled to a front end of the body or a rear end of the body;
the surface comprises a portion of the coupler or of another railcar; and
the processor is further configured to:
determine whether the railcar is coupled to the other railcar based on the reflection of the radar signal from the portion of the coupler or of the other railcar; and
determine a speed at which the railcar is coupled to the other railcar based on the reflection of the radar signal from the coupler or the other railcar.

11. The railcar monitoring system of claim 10, wherein the processor is further configured to:
determine an amount of compression of the coupler based on the reflection of the radar signal from the portion of the coupler or of the other railcar;
determine whether the amount of compression satisfies a hazard threshold; and
responsive to determining that the amount of compression satisfies the hazard threshold, transmit a warning to a remote monitoring station regarding the amount of compression.

12. The railcar monitoring system of claim 10, wherein:
the sensor device further comprises a wireless receiver configured to receive an identifier of the other railcar from a radio beacon coupled to the other railcar; and
the processor is further configured to, after determining that the railcar is coupled to the other railcar:
receive the identifier of the other railcar from the wireless receiver;
transmit the identifier of the other railcar to a remote monitoring station, wherein the remote monitoring station is configured to (i) receive a plurality of railcar identifiers including the identifier of the other railcar and additional identifiers for additional railcars and (ii) determine based on the plurality of railcar identifiers a composition of a train comprising the railcar, the other railcar, and the additional railcars.

13. The railcar monitoring system of any one of claims 1 through 12, wherein:
the surface is not stationary with respect to the radar transceiver;
the sensor device is positioned such that a field of view of the radar transceiver includes the surface and another portion of the railcar that is stationary with respect to the radar transceiver;
transmitting the radar signal further comprises transmitting the radar signal to the other portion of the railcar in addition to the surface; and
the processor is further configured to calibrate the railcar-characteristic determination based on the reflection of the radar signal from the other portion of the railcar.

14. A method for monitoring a railcar, the method comprising providing performing the operations of any one of claims 1 through 13.

15. A non-transitory, computer-readable medium storing instructions that, when executed by a processor of a sensor device, cause the sensor device to perform the operations of any one of claims 1 through 13.
